# EUROPEAN PATENT APPLICATION

(11) **EP 3 381 741 A1**
(43) Date of publication of application: **03.10.2018**
(21) Application number: 17189879.4
(22) Date of filing: 07.09.2017
(51) Int. Cl.: B60N 2/00

(54) **SEATING SENSOR**

(30) Priority: 28.03.2017 JP 2017063610
(71) Applicant: AISIN SEIKI KABUSHIKI KAISHA, Kariya-shi Aichi 448-8650 (JP)
(72) Inventor: NAKAYAMA, Koichi, Kariya-shi,, Aichi 448-8650 (JP); AOYAMA, Mutsuro, Kariya-shi,, Aichi 448-8650 (JP); KITO, Kosuke, Kariya-shi,, Aichi 448-8650 (JP)
(74) Representative: TBK

(57) **Abstract**

A seating sensor (30, 60) includes: a holder (31, 61, 80) configured to be mounted, in a state of being sandwiched between a cushion member (20, 70) of a seat cushion (6) of a vehicle and a support member (SU, SU1) supporting the cushion member, on the support member, and including a first pressure receiving portion (33, 63, 81) positioned on a first plane (P1, P11) expanding along the support member and a second pressure receiving portion (34, 64, 82) connected to the first pressure receiving portion and positioned on a second plane (P2, P12) expanding along the support member in a state of crossing the first plane; and a sensor body (40, 67) placed on the holder to extend over the first pressure receiving portion and the second pressure receiving portion and configured to detect information of a load applied from the cushion member.

## Description

### TECHNICAL FIELD

Embodiments disclosed herein relate to a seating sensor.

### BACKGROUND DISCUSSION

As a seating sensor, the seating sensor disclosed in, for example, CN 203331880 U (see Figs. 1 to 3 thereof) has been known in the related art. This seating sensor includes a holder that is mounted on a support member (a plurality of S-shaped springs) disposed under a cushion member of a seat cushion of a vehicle to support the cushion member, and a sheet-shaped sensor body that is placed on the holder and detects information of a load applied from the cushion member. In addition, since the support member is positioned on a plane expanding substantially horizontally, the holder serving as a pressure receiving surface of the load is positioned on a plane extending substantially horizontally along the support member above the support member.

However, the support member is not necessarily positioned on a single plane, and a portion of the support member may be positioned on a plane crossing the horizontal plane. When the holder is mounted on the support member to extend over two planes, an unnecessary space is formed below the holder due to the inclination of the holder.

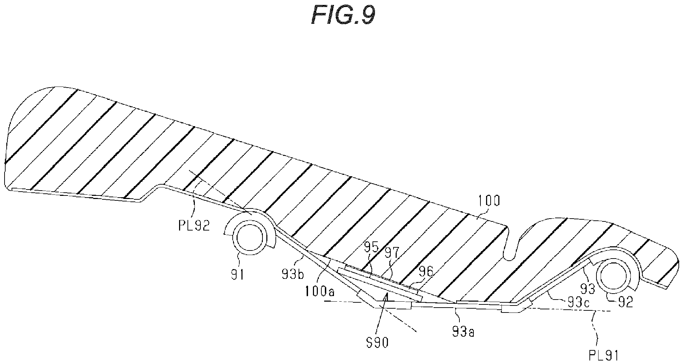

That is, as illustrated in Fig. 9, a plurality of S-shaped springs 93 serving as the support member basically extending in the front-and-rear direction are suspended between a pair of front and rear connection rods 91 and 92 constituting the frame of the seat cushion in a state of being spaced apart from each other in the width direction (the direction orthogonal to the plane of the sheet). Each S-shaped spring 93 has a flat portion 93a that extends substantially horizontally below the two connection rods 91 and 92. Further, each S-shaped spring 93 has a front inclined portion 93b that is connected to the front end of the flat portion 93a and extends forwardly obliquely upward to be hooked on the front connection rod 91, and a rear inclined portion 93c that is connected to the rear end of the flat portion 93a and extends backwardly obliquely upward to be hooked on the rear connection rod 92. Thus, in the plurality of S-shaped springs 93 (the support member), the flat portions 92a are positioned on a substantially horizontal plane PL91, and the front inclined portions 93b are positioned on a plane PL92 inclined with respect to the plane PL91.

In the S-shaped springs 93 (the support member), a holder 95 is mounted in an inclined state to extend over the flat portion 93a and the front inclined portion 93b (planes PL91 and PL92), and a sensor body 97 configured with, for example, a membrane switch is placed on the holder 95 via a cushion material 96. Then, a cushion member 100 is supported on the plurality of S-shaped springs 93 (the support member) on which the holder 95 is mounted. In the cushion member 100, a recessed portion 100a is formed to be recessed upward to correspond to the arrangement of the holder 95 (the seating sensor), etc. The bottom surface of the recessed portion 100a is basically in contact with or close to the sensor body 97 such that a pressure is not applied to the sensor body 97. That is, the cushion member 100 is molded to secure a space for accommodating the holder 95 (the seating sensor), etc.

Thus, it is confirmed that when the holder 95 is mounted on the S-shaped springs 93 (the support member) to extend over the flat portion 93a and the front inclined portion 93b (the planes PL91 and PL92), the position of the holder 95 with respect to the S-shaped springs 93 becomes high, and thus, an unnecessary space S90 is formed below the holder 95. Also, it is confirmed that the vertical dimension of the cushion member 100 is reduced by the size of the space S90. In this case, the sitting comfortability of the seat cushion may be deteriorated.

Meanwhile, in order to avoid the formation of the unnecessary space S90, for example, it may be taken into account to mount the holder 95 only on the flat portion 93a (the plane PL91). However, in this case, since the positions where the load information is detected by the sensor body 97 placed on the holder 95 are limited, the detection performance may be deteriorated, and thus, for example, the load information may not be detected at optimal positions.

Thus, a need exists for a seating sensor which is able to ensure both detection performance and the sitting comfortability performance.

### SUMMARY OF THE INVENTION

It is therefore the object of the invention to provide a seating sensor whose detection performance and sitting comfortability performance are improved.

The object of the invention is achieved by a seating sensor having the features of claim 1.

Further advantageous developments of the invention are defined in the dependent claims.

A seating sensor according to an aspect of this invention includes: a holder configured to be mounted, in a state of being sandwiched between a cushion member of a seat cushion of a vehicle and a support member supporting the cushion member, on the support member, and including a first pressure receiving portion positioned on a first plane expanding along the support member and a second pressure receiving portion connected to the first pressure receiving portion and positioned on a second plane expanding along the support member in a state of crossing the first plane; and a sensor body placed on the holder to extend over the first pressure receiving portion and the second pressure receiving portion and configured to detect information of a load applied from the cushion member.

According to this configuration, even though the support member is not positioned on a single plane, the first pressure receiving portion and the second pressure receiving portion of the holder are formed along the support member so that an unnecessary space formed below the holder may be reduced. Thus, the reduction of the vertical dimension of the cushion member may be suppressed, and the sitting comfortability performance of the seat cushion may be appropriately ensured. Further, even though the support member is not positioned on a single plane, the first pressure receiving portion and the second pressure receiving portion are arranged along the support member, and the sensor body is placed on the holder to extend over the first pressure receiving portion and the second pressure receiving portion. Since, the restriction to the arrangement of the sensor body due to the shape of the support member is reduced in this way, and it may be more likely to detect the load information at a position where the detection performance becomes optimum. Furthermore, it may be more likely to appropriately ensure the detection performance.

In the seating sensor, it is preferable that the first pressure receiving portion and the second pressure receiving portion are connected to each other by a fixing portion such that the first pressure receiving portion and the second pressure receiving portion are non-tiltable.

According to this configuration, the fixing portion makes the first pressure receiving portion and the second pressure receiving portion non-tiltable. Thus, even when an attachment position to the support member may not be arranged on any one of the first pressure receiving portion and the second pressure receiving portion, the first pressure receiving portion or the second pressure receiving portion may be further stabilized in posture and may function as a pressure receiving surface of the load. This increases the degree of freedom in the arrangement of the holder, so that it may be more likely to detect the load information at a position where the detection performance becomes optimum. Furthermore, it may be more likely to appropriately ensure the detection performance.

In the seating sensor, it is preferable that the first pressure receiving portion and the second pressure receiving portion are connected to each other by a flexible portion such that the first pressure receiving portion and the second pressure receiving portion are tiltable.

According to this configuration, for example, even though the support member is positioned on the planes having different inclination angles, the first pressure receiving portion and the second pressure receiving portion may be tilted by the flexible portion to follow the support member. Thus, an unnecessary space generated below the holder in a desirable state may be appropriately reduced by the inclination angle. Thus, the versatility of the holder may be improved.

The aspect of this invention is effective in ensuring both the detection performance and the sitting comfortability performance.

### BRIEF DESCRIPTION OF THE DRAWINGS

The foregoing, additional features, effects and advantages of this invention will become more apparent from the following detailed description considered with the reference to the accompanying drawings, wherein:
Fig. 1 is a vertical sectional view illustrating a structure of a seating sensor according to a first exemplary embodiment;
Fig. 2 is a vertical sectional view schematically illustrating the structure of the seating sensor according to the first exemplary embodiment;
Fig. 3 is a plan view illustrating the structure of the seating sensor according to the first exemplary embodiment;
Fig. 4 is a perspective view illustrating the structure of the seating sensor according to the first exemplary embodiment;
Fig. 5 is a side view illustrating the structure of the seating sensor according to the first exemplary embodiment;
Fig. 6 is an exploded perspective view illustrating the structure of the seating sensor according to the first exemplary embodiment;
Fig. 7 is a horizontal sectional view illustrating a structure of a seating sensor according to a second exemplary embodiment;
Fig. 8 is a side view illustrating a structure and an operation of a seating sensor according to a modification; and
Fig. 9 is a vertical sectional view illustrating a structure of a seating sensor of a related art.

### DETAILED DESCRIPTION

### (First Exemplary Embodiment)

Hereinafter, a first exemplary embodiment of the seating sensor will be described. Hereinbelow, the forward and rearward direction of a vehicle will be referred to as a "longitudinal direction."

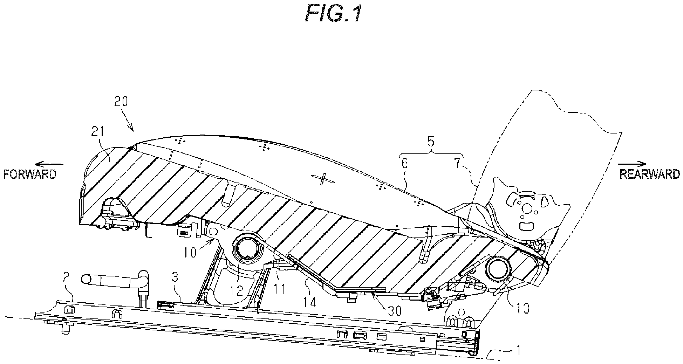

As illustrated in Fig. 1, lower rails 2 are fixed on a floor 1 of a vehicle in a state of extending in the longitudinal direction, and upper rails 3 are connected to the lower rails 2 to be movable in the longitudinal direction with respect to the lower rails 2.

Both the lower rails 2 and the upper rails 3 are arranged in pairs in the width direction (the direction orthogonal to the plane of the sheet of Fig. 1). Fig. 1 illustrates the pair of the lower rail 2 and the upper rail 3 arranged on the right side in the state of facing the forward direction. A seat 5 is fixed and supported on the opposite upper rails 3 to form the seating portion for an occupant.

The seat 5 includes a seat cushion 6 forming the seating surface and a seat back 7 tiltably (pivotably) supported at the rear end portion of the seat cushion 6. The seat cushion 6 includes a cushion frame 10 forming the frame of the seat cushion 6 and a cushion member 20 covering the cushion frame 10. The cushion frame 10 includes a pair of cushion side frames 11 that are arranged side by side in the width direction to be placed on the opposite upper rails 3 and made of, for example, a metal plate. Further, the cushion frame 10 includes a substantially cylindrical front connection rod 12 that extends in the width direction to connect the front portions of the opposite cushion side frames 11 to each other, and a substantially cylindrical rear connection rod 13 that extends in the width direction to connect the rear portions of the opposite cushion side frames 11 to each other. The cushion member 20 is supported on the cushion frame 10 in a state of covering the entire cushion frame 10 from the upper side.

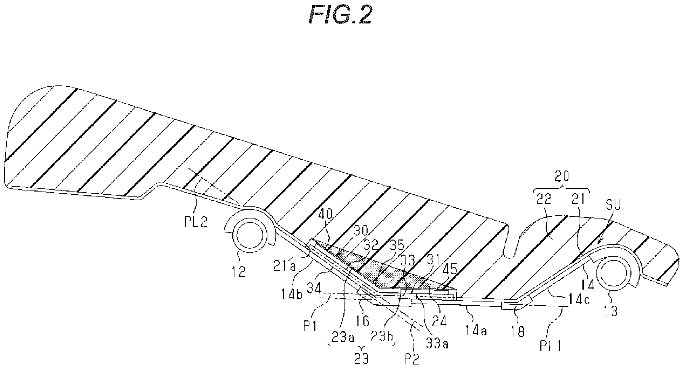

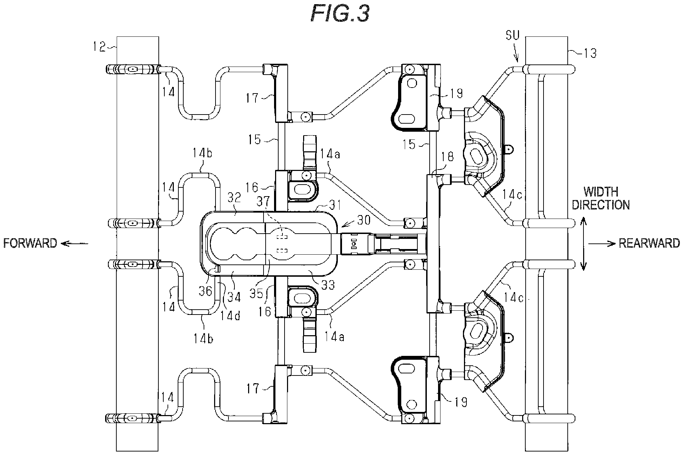

That is, as illustrated in Figs. 2 and 3, a plurality of S-shaped spring 14 basically extending in the longitudinal direction are suspended between the front connection rod 12 and the rear connection rod 13 in a state of being spaced apart from each other in the width direction. Each S-shaped spring 14 has a flat portion 14a that extends substantially horizontally below the front connecting rod 12 and the rear connecting rod 13. Further, each S-shaped spring 14 has a front inclined portion 14b that is connected to the front end of the flat portion 14a and extends forwardly obliquely upward to be hooked on the front connection rod 12, and a rear inclined portion 14c that is connected to the rear end of the flat portion 14a and extends backwardly obliquely upward to be hooked on the rear connection rod 13. Thus, in the plurality of S-shaped springs 14, the flat portions 14a are positioned on the substantially horizontal plane PL1, and the front inclined portions 14b are positioned on the plane PL2 inclined forwardly obliquely upward with respect to the plane PL1.

In addition, a substantially columnar connection rod 15 extending in the width direction is placed on the plurality of S-shaped springs 14 at the connection positions between the flat portions 14a and the front inclined portions 14b, and a plurality of resin molds 16 and 17 are molded to integrally cover the connection positions together with the connection rod 15. Similarly, another substantially columnar connection rod 15 extending in the width direction is placed on the plurality of S-shaped springs 14 at the connection positions between the flat portions 14a and the rear inclined portions 14c. Then, a resin mold 18 is molded on the pair of S-shaped springs 14, the central portions of which are located adjacent to each other, to integrally cover the connection positions together with the connection rod 15. Further, resin molds 19 are molded on the outermost S-shaped spring 14, respectively, to integrally cover the connection positions together with the connection rod 15. The cushion member 20 is supported on the cushion frame 10 at the S-shaped spring 14, the two connection rods 15, and the resin molds 16 to 19. The plurality of S-shaped spring 14, the two connection rods 15, and the resin molds 16 to 19 constitute a support member SU.

A seating sensor 30 is mounted on the support member SU. The seating sensor 30 includes a holder 31 mounted on the support member SU in a state of being sandwiched between the cushion member 20 and the support member SU, and made of, for example, a resin material. The holder 31 includes a substantially rectangular dish-shaped pedestal 32 that extends in the longitudinal direction with a width dimension corresponding to the minimum spacing distance between the pair of S-shaped springs 14 the central portions of which are located adjacent to each other. The pedestal 32 is disposed to extend over the flat portions 14a and the front inclined portions 14b, and bent in accordance with the angle formed between the flat portions 14a and the front inclined portions 14b (planes PL1 and PL2). That is, the pedestal 32 has a first pressure receiving portion 33 positioned on the first plane P1 expanding substantially horizontally along the flat portions 14a (the support member SU). Further, the pedestal 32 has a second pressure receiving portion 34 positioned on the second plane P2 connected to the front end of the first pressure receiving portion 33 and expanding along the front inclined portions 14b (the support member SU) to cross the first plane P1. The first pressure receiving portion 33 and the second pressure receiving portion 34 are non-tiltably connected to each other. The connection portion between the first pressure receiving portion 33 and the second pressure receiving portion 34 constitutes a fixing portion 35.

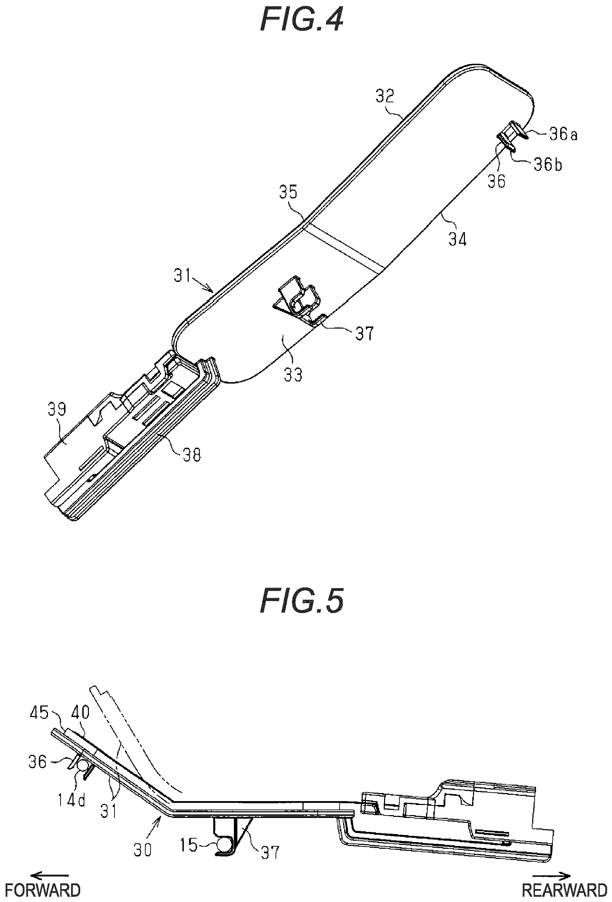

As illustrated in Fig. 4, a first fitting portion 36 protrudes downward from the front end portion of one side of the holder 31 in the width direction (the right side in Fig. 4). The first fitting portion 36 includes a pair of fitting pieces (members) 36a and 36b arranged side by side in the longitudinal direction to be formed in a substantially U shape. The spacing distance in the longitudinal direction between the opposite fitting pieces (members) 36a and 36b is set to be equal to the diameter of each S-shaped spring 14. Further, a forwardly opened substantially U-shaped second fitting portion 37 protrudes downward from the central portion of the holder 31 in the width direction in the vicinity of the fixing portion 35. The vertical opening width of the second fitting portion 37 is set to be equal to the diameter of the connection rod 15.

As illustrated in Figs. 3 and 5, the holder 31 is mounted on the support member SU in a state where the central portion of the connection rod 15 exposed from the opposite resin molds 16 located adjacent to each other in the width direction is fitted into the second fitting portion 37 from the front side, and a horizontally extending portion 14d that extends in the width direction from the central portion of the front inclined portion 14b in the longitudinal direction is fitted into the first fitting portion 36 from the lower side. That is, the holder 31 is supported on the support member SU at the two points of the first and second fitting portions 36 and 37.

As illustrated by the alternate long and two short dashed line of Fig. 5, when the holder 31 is mounted on the support member SU, the connection rod 15 is fitted into the second fitting portion 37 in a state where the holder 31 is inclined forwardly obliquely upward in advance. In this state, the connection rod 15 serving as a fulcrum is rotated such that the front end side of the holder 31 moves down, and the horizontally extending portion 14d is fitted into the first fitting portion 36, so that the holder 31 is mounted on the support member SU.

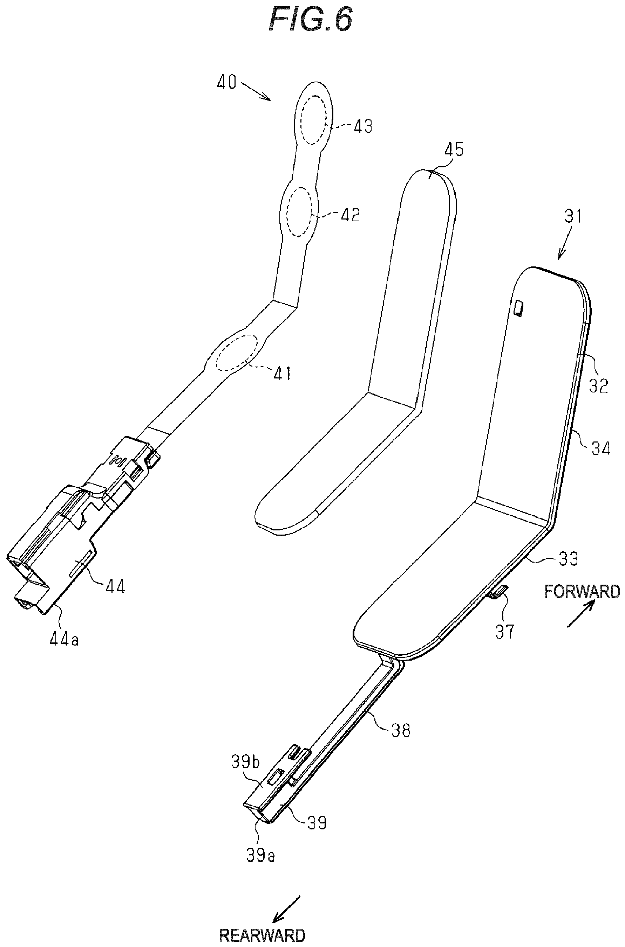

As illustrated in Fig. 6, a substantially elongated arm portion 38 is provided in the holder 31 to extend rearward from the rear end of the holder 31. In addition, a connector holding portion 39 is provided at the rear end of the arm portion 38. The connector holding portion 39 has a substantially block shaped connection portion 39a that protrudes upward from the rear end of the arm portion 38, and a substantially plate shaped engagement piece (member) 39b that is connected to the top end surface of the connection portion 39a. The engagement piece (member) 39b protrudes from the opposite sides of the connection portion 39a in the width direction, and extends forward.

A substantially elongated cushion material 45 extending in the longitudinal direction along the pedestal 32 is attached to the holder 31 by, for example, an adhesive. The cushion material 45 extends over the first pressure receiving portion 33 and the second pressure receiving portion 34 in the longitudinal direction, and is elastically deformed to be bent along the first pressure receiving portion 33 and the second pressure receiving portion 34. Then, a sensor body 40 extending in the longitudinal direction along the cushion material 45 is attached to (placed on) the cushion material 45 using, for example, an adhesive. The sensor body 40 also extends over the first pressure receiving portion 33 and the second pressure receiving portion 34 in the longitudinal direction, and is elastically deformed to be bent along the first pressure receiving portion 33 and the second pressure receiving portion 34.

The sensor body 40 is configured with a membrane switch obtained by laminating, via an insulating spacer (e.g., a polyester film), a pair of contact sheets each of which is obtained by printing a conductive ink (e.g., silver paste or carbon paste) on an insulating film (e.g., a polyester film). The sensor body 40 includes a plurality of (three) substantially circular detection units 41, 42, and 43 arranged side by side in the longitudinal direction. The sensor body 40 detects information of a load applied from the cushion member 20 in the detection units 41 to 43. At this time, the load is received by the holder 31 at the first pressure receiving portion 33 and the second pressure receiving portion 34. That is, the portions (the first pressure receiving portion 33 and the second pressure receiving portion 34) of the holder 31 that receive the load are formed in a bent shape (the shape having a bent point) using the fact that the portions may be followed by the flexible sensor body 40 (and the cushion material 45).

Here, the detection unit 41 is arranged to correspond to the first pressure receiving portion 33, and the detection units 42 and 43 are arranged to correspond to the second pressure receiving portion 34. This is because the detection units 41 to 43 are arranged at optimal positions for detecting the load information. In other words, the holder 31 forming the pressure receiving surface of the detection units 41 to 43 (the sensor body 40) is bent along the support member SU in order to arrange the detection units 41 to 43 at the optimal positions for detecting the load information.

A connector 44 is provided at the rear end of the sensor body 40 to be connected with, for example, a control device. An engagement portion 44a in the form of a substantially C-shaped groove protrudes from the rear end of the connector 44 and communicates with the connector 44 in the longitudinal direction. When the engagement portion 44a is mounted on the engagement piece (member) 39b, the connector 44 is held on the holder 31.

As illustrated in Fig. 2, the cushion member 20 is supported on the support member SU on which the holder 31 (the seating sensor 30) is mounted as described above. The cushion member 20 includes a rear surface material 21 made of, for example, a non-woven fabric, and a cushion pad 22 that is covered by the rear surface material 21 on the bottom surface thereof and made of, for example, a urethane resin. An opening 21a is formed in the rear surface material 21 to correspond to the arrangement of the holder 31 (the seating sensor 30). Meanwhile, a recessed portion 23 is formed in the cushion pad 22 to be recessed upward to correspond to the arrangement of the holder 31 (the seating sensor 30). The bottom surface of the recess 23 is basically in contact with or close to the sensor body 40 to the extent that a pressure is not applied to the sensor body 40. That is, the recessed portion 23 includes a first recessed portion 23a and a second recessed portion 23b along the first pressure receiving portion 33 and the second pressure receiving portion 34 of the holder 31, respectively.

That is, the cushion pad 22 is molded to secure the space for accommodating the holder 31 (the seating sensor 30) etc. However, since the holder 31 is bent along the support member SU (the planes PL1 and PL2) as described above, a protrusion 24 is formed on the cushion pad 22 to raise the bottom surface of the recessed portion 23 downward as illustrated in a pattern of Fig. 2, so as to fill the unnecessary space S90 illustrated in the related art (see Fig. 9).

Further, the holder 31 is formed with a drain hole 33a in the first pressure receiving portion 33 that is the lowermost position of the holder 31. Water accumulated in the holder 31 is quickly discharged through the drain hole 33a, so that the deterioration of the cushion material 45 such as hardening is suppressed.

Next, the operation and the effects of the present exemplary embodiment will be described.
(1) In the present exemplary embodiment, even though the support member SU is not positioned on a single plane, the first pressure receiving portion 33 and the second pressure receiving portion 34 of the holder 31 follow the support member SU so that the unnecessary space formed below the holder 31 may be reduced. Thus, the reduction of the vertical dimension of the cushion member 20 may be suppressed, and the sitting comfortability performance of the seat cushion 6 may be appropriately ensured. Further, even though the support member SU is not positioned on a single plane, the first pressure receiving portion 33 and the second pressure receiving portion 34 are arranged along the support member SU, and the sensor body 40 is placed on the holder 31 to extend over the first pressure receiving portion 33 and the second pressure receiving portion 34. Since the restriction to the arrangement of the sensor body 40 due to the shape of the support member SU is reduced in this way, and it may be more likely to detect the load information at a position where the detection performance becomes optimum. Furthermore, it may be more likely to appropriately ensure the detection performance. Thus, both the detection performance and the sitting comfortability performance may be ensured.
(2) In the present exemplary embodiment, the fixing portion 35 makes the first pressure receiving portion 33 and the second pressure receiving portion 34 non-tiltable. Thus, even when an attachment position to the support member SU may not be arranged on any one of the first pressure receiving portion 33 and the second pressure receiving portion 34, the first pressure receiving portion 33 or the second pressure receiving portion 34 may be further stabilized in posture and may function as a pressure receiving surface of the load. This increases the degree of freedom in the arrangement of the holder 31, so that it may be more likely to detect the load information at a position where the detection performance becomes optimum. Furthermore, it is more likely to appropriately ensure the detection performance.
(3) In the present exemplary embodiment, the support member SU may not be positioned on a single plane. Thus, it is possible to increase the degree of freedom in the design of the support member SU (e.g., the S-shaped springs 14) so that it is more likely to improve the sitting comfortability performance.
(4) In the present exemplary embodiment, the opening 21a is formed in the rear surface material 21 to correspond to the arrangement of the seating sensor 30, so that the cushion pad 22 is brought into contact with or close to the sensor body 40. Thus, it is possible to avoid that the sensor body 40 (the detection units 41 to 43) erroneously detects the load information when a pressure is applied from the relatively hard rear surface material 21.
(5) In the present exemplary embodiment, the drain hole 33a is formed in the first pressure receiving portion 33 that is the lowermost position of the holder 31. Thus, water accumulated in the holder 31 is quickly discharged through the drain hole 33a, so that the deterioration of the cushion material 45 such as hardening may be suppressed.
(6) In the present exemplary embodiment, the sensor body 40 is a membrane switch formed in a film shape. Thus, it is possible to make the sensor body 40 thinner and to further improve drip-proof performance and dust-proof performance.

### (Second Exemplary Embodiment)

Hereinafter, a second exemplary embodiment of the seating sensor will be described. Since the second exemplary embodiment has the configuration conceived by modifying the seating sensor according to a modification of the support member of the first exemplary embodiment, similar descriptions to those of the first exemplary embodiment will be omitted.

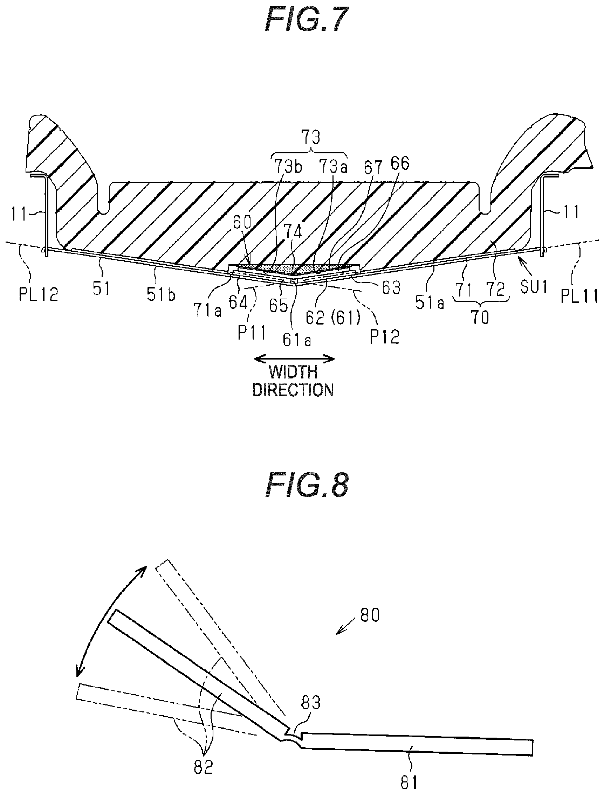

As illustrated in Fig. 7, S-shaped springs 51 basically extend in the width direction and are suspended between the opposite cushion side frames 11. A plurality of S-shaped springs 51 are provided in a state of being spaced apart from each other in the longitudinal direction (the direction orthogonal to the plane of the sheet). The plurality of S-shaped springs 51 constitute a support member SU1.

Each S-shaped spring 51 has a first inclined portion 51 a and a second inclined portion 51 b that ascend toward one and the other sides (the right and left sides in Fig. 7), respectively, from the center of the S-shaped spring 51 in the width direction. Thus, the plurality of S-shaped springs 51 are positioned such that the first inclined portions 51a and the second inclined portions 51b thereof are respectively positioned on planes PL11 and PL12, which are symmetrically inclined in the width direction.

A seating sensor 60 mounted on the support member SU1 includes a holder 61 made of, for example, a resin material. The holder 61 includes a substantially rectangular dish-shaped pedestal 62 that extends in the width direction so as to extend over the first inclined portion 51a and the second inclined portion 51 b. The pedestal 62 is bent in accordance with the angle formed by the first inclined portion 51 a and the second inclined portion 51b (the planes PL11 and PL12). That is, the pedestal 62 includes a first pressure receiving portion 63 that is positioned on a first plane P11 expanding along the first inclined portion 51a (the support member SU1). Further, the pedestal 62 includes a second pressure receiving portion 64 that is connected to the tip end of the first pressure receiving portion 63 and positioned on a second plane P12 expanding along the second inclined portion 51b (the support member SU1) to cross the first plane P11. The first pressure receiving portion 63 and the second pressure receiving portion 64 are non-tiltably connected to each other. The connection portion between the first pressure receiving portion 63 and the second pressure receiving portion 64 constitutes a fixing portion 65.

A substantially elongated cushion material 66 extending in the width direction along the pedestal 62 is attached to the holder 61 by, for example, an adhesive. The cushion material 66 extends over the first pressure receiving portion 63 and the second pressure receiving portion 64 in the width direction, so as to be elastically deformed and bent along the first pressure receiving portion 33 and the second pressure receiving portion 34. Then, a sensor body 67 extending in the width direction along the cushion material 66 is attached to (placed on) the cushion material 66 by, for example, an adhesive. The sensor body 67 also extends over the first pressure receiving portion 63 and the second pressure receiving portion 64 in the width direction, so as to be elastically deformed and bent along the first pressure receiving portion 63 and the second pressure receiving portion 64.

The sensor body 67 is also configured with a membrane switch similar to the sensor body 40. The sensor body 67 forms a plurality of detection units (not illustrated) arranged side by side in the width direction. The sensor body 67 detects information of a load applied from a cushion member 70 in the detection units similar to the cushion member 20. At this time, the load is received by the first pressure receiving portion 63 and the second pressure receiving portion 64 of the holder 61. That is, the portions (the first pressure receiving portion 63 and the second pressure receiving portion 64) of the holder 61 that receive the load are formed in the bent shape (the shape having a bent point) using the fact that the portions may be followed by the flexible sensor body 67 (and the cushion material 66).

Here, at least one of the plurality of detecting units is arranged to correspond to the first pressure receiving portion 63 or the second pressure receiving portion 64. This is because the detection units are arranged at optimal positions for detecting the load information. In other words, the holder 61 forming the pressure receiving surface of the detection units (the sensor body 67) is bent along the support member SU1 in order to arrange the detection units at the optimal positions for detecting the load information.

The cushion member 70 is supported on the support member SU1 in a state where the holder 61 (the seating sensor 60) mounted on the support member SU1 is sandwiched between the support member SU1 and the cushion member 70. The cushion member 70 includes a rear surface material 71 made of, for example, a non-woven fabric, and a cushion pad 72 that is covered by the rear surface material 71 on the bottom surface thereof and made of, for example, a urethane resin. An opening 71a is formed in the rear surface material 71 to correspond to the arrangement of the holder 61 (the seating sensor 60). Meanwhile, a recessed portion 73 is formed in the cushion pad 72 to be recessed upward to correspond to the arrangement of the holder 61 (the seating sensor 60). The bottom surface of the recessed portion 73 is basically in contact with or close to the sensor body 67 to the extent that a pressure is not applied to the sensor body 67. That is, the recessed portion 73 includes a first recessed portion 73a and a second recessed portion 73b to correspond to the first pressure receiving portion 63 and the second pressure receiving portion 64 of the holder 61, respectively.

That is, the cushion pad 72 is molded to secure the space for accommodating the holder 61 (the seating sensor 60) etc. However, since the holder 61 is bent along the support member SU1 (the planes PL11 and PL22) as described above, a protrusion 74 is formed on the cushion pad 72 to raise the bottom surface of the recessed portion 73 downward so as to fill the unnecessary space, as illustrated in a pattern of Fig. 7.

In addition, the holder is formed with a drain hole 61a in the fixing portion 65 that is the lowermost position of the holder 61. Water accumulated in the holder 61 is quickly discharged through the drain hole 61a so that the deterioration of the cushion material 66 such as hardening is suppressed.

As described above, according to the present exemplary embodiment, the same effects as those of the first exemplary embodiment may be obtained.

The above-described exemplary embodiments may be modified as described below.

As illustrated in Fig. 8, a holder 80 may be configured such that a first pressure receiving portion 81 and a second pressure receiving portion 82 are tiltable. That is, the first pressure receiving portion 81 and the second pressure receiving portion 82 may be connected to each other with a flexible portion 83 which makes the first pressure receiving portion 81 and the second pressure receiving portion 82 tiltable. With this modification, even in the support member SU (or SU1) positioned on the two planes PL1 and PL2 (or PL11 and PL12) having different inclination angles, the first pressure receiving portion 81 and the second pressure receiving portion 82 may be tilted by the flexible portion 83 to follow the support member SU (or SU1). Thus, the unnecessary space formed below the holder 80 may be appropriately reduced by the inclination angle, and the versatility of the holder 80 may be improved. Further, each of the first pressure receiving portion 81 and the second pressure receiving portion 82 may be supported at two points on the support member SU (or SU1).

In the first exemplary embodiment, the first fitting portion 36 may be omitted, and the first pressure receiving portion 33 may be simply placed on the support member SU. Alternatively, the second fitting portion 37 may be omitted, and the second pressure receiving portion 34 may be simply placed on the support member SU.

In the first exemplary embodiment, the number of the detection units may be arbitrarily modified as long as at least one of the detection units is disposed to correspond to the first pressure receiving portion 33 or the second pressure receiving portion 34.

In the first exemplary embodiment, the support member may be configured with only the plurality of S-shaped springs 14.

In each of the above-described exemplary embodiments, the cushion materials 45 and 66 may be omitted.

In each of the above-described exemplary embodiments, at least some of the plurality of S-shaped springs 14 and 51 may be connected to each other by a single wire, or all the S-shaped springs 14 and 51 may be separated from each other.

In each of the above-described exemplary embodiments, the holder may have pressure receiving portions positioned on three or more planes expanding to cross each other along the supporting member.

In each of the above-described exemplary embodiments, the holder may be made of a metal.

Next, the technical idea that may be understood from the above-described exemplary embodiments and modifications is additionally described.
(A) In the seating sensor, the sensor body is a membrane switch formed in a film shape.
   According to this configuration, since the sensor body is a membrane switch formed in a film shape, it is possible to make the sensor body thinner and to further improved drip-proof performance and dust-proof performance.
(B) In the seating sensor, a drain hole is formed in the holder.
   The principles, preferred embodiment and mode of operation of the present invention have been described in the foregoing specification; however, the invention which is intended to be protected is not to be construed as limited to the particular embodiments disclosed, i.e. all such variations, changes and equivalents which fall under the scope of the present invention as defined in the appended claims are embraced thereby.

A seating sensor (30, 60) includes: a holder (31, 61, 80) configured to be mounted, in a state of being sandwiched between a cushion member (20, 70) of a seat cushion (6) of a vehicle and a support member (SU, SU1) supporting the cushion member, on the support member, and including a first pressure receiving portion (33, 63, 81) positioned on a first plane (P1, P11) expanding along the support member and a second pressure receiving portion (34, 64, 82) connected to the first pressure receiving portion and positioned on a second plane (P2, P12) expanding along the support member in a state of crossing the first plane; and a sensor body (40, 67) placed on the holder to extend over the first pressure receiving portion and the second pressure receiving portion and configured to detect information of a load applied from the cushion member.

## Claims

1. A seating sensor (30, 60) comprising:
a holder (31, 61, 80) configured to be mounted, in a state of being sandwiched between a cushion member (20, 70) of a seat cushion (6) of a vehicle and a support member (SU, SU1) supporting the cushion member (20, 70), on the support member (SU, SU1), and including a first pressure receiving portion (33, 63, 81) positioned on a first plane (P1, P11) expanding along the support member (SU, SU1) and a second pressure receiving portion (34, 64, 82) connected to the first pressure receiving portion (33, 63, 81) and positioned on a second plane (P2, P12) expanding along the support member (SU, SU1) in a state of crossing the first plane (P1, P12); and
a sensor body (40, 67) placed on the holder (31, 61, 80) to extend over the first pressure receiving portion (33, 63, 81) and the second pressure receiving portion (34, 64, 82) and configured to detect information of a load applied from the cushion member (20, 70).

2. The seating sensor (30, 60) according to claim 1,
wherein the first pressure receiving portion (33, 63) and the second pressure receiving portion (34, 64) are connected to each other by a fixing portion (35, 65) such that the first pressure receiving portion (33, 63) and the second pressure receiving portion (34, 64) are non-tiltable.

3. The seating sensor (30, 60) according to claim 1,
wherein the first pressure receiving portion (81) and the second pressure receiving portion (82) are connected to each other by a flexible portion (83) such that the first pressure receiving portion (81) and the second pressure receiving portion (82) are tiltable.
